# EUROPEAN PATENT APPLICATION

(11) **EP 4 310 872 A1**
(43) Date of publication of application: **24.01.2024**
(21) Application number: 22771369.0
(22) Date of filing: 14.03.2022
(51) Int. Cl.: H01G 2/10, H01G 9/10, H01M 50/107, H01M 50/143, H01M 50/152, H01M 50/167, H01M 50/179, H01M 50/342, H01M 50/545, H01M 50/548, H01M 50/559

(54) **SEALING PLATE AND POWER STORAGE DEVICE USING SAME**

(30) Priority: 18.03.2021 JP 2021044228
(71) Applicant: Panasonic Intellectual Property Management Co., Ltd., Kadoma-shi, Osaka 571-0057 (JP)
(72) Inventor: KOHIRA, Kazutoshi, Kadoma-shi, Osaka 571-0057 (JP); GESHI, Shinya, Kadoma-shi, Osaka 571-0057 (JP); HASHIMOTO, Junya, Kadoma-shi, Osaka 571-0057 (JP)
(74) Representative: Novagraaf International SA
(86) International application number: PCT/JP2022/011259
(87) International publication number: WO 2022/196623

(57) **Abstract**

A sealing plate of the present disclosure includes a flange part in an annular shape provided on an outer peripheral edge, a raised part in an annular shape located nearer to a center than the flange part and being thicker than the flange part, a fragile part located nearer to the center than the raised part and being thinnest in the sealing plate, a relay part in an annular shape located nearer to the center than the fragile part, and a middle part located nearer to the center than the relay part and including a center part of the sealing plate, wherein in the thickness direction of the sealing plate, the fragile part is apart from the flange part in the first direction, and the relay part protrudes toward a second direction that is opposite to the first direction in the thickness direction.

## Description

### Technical Field

The present disclosure relates to a sealing plate and a power storage device using the same.

### Background Art

Power storage devices are widely used as power supplies for operating electronic equipment and for driving movable bodies such as automobiles. Examples of the power storage devices include a cylindrical battery. The cylindrical battery includes a sealing body including a valve body. The valve body seals an opening of an outer covering can via a gasket at the opening of the outer covering can. Note here that prior art literatures disclosing such a sealing body include the following patent literature 1.

### Citation List

### Patent Literature

PTL 1: Japanese Patent No. 6662377

### Summary of Invention

### Technical Problem

The valve body mentioned above is formed by processing metal materials such as aluminum, and therefore shows a certain level or more of reliability with respect to external and internal stresses. On the other hand, in order to further improve the volume inside a power storage device and to further reduce the size of the power storage device, a sealing plate such as a valve body is required to be thinner. However, when the sealing plate becomes thinner, the resistance against the stress is easily lowered, and the reliability with respect to the sealing plate is easily lowered. Thus, an object of the present disclosure is to provide a sealing plate excellent in reliability and a power storage device using the sealing plate.

### Solution to Problem

A sealing plate in accordance with one aspect of the present disclosure includes a flange part in an annular shape provided on an outer peripheral edge, a raised part in an annular shape located nearer to a center than the flange part and being thicker than the flange part, a fragile part located nearer to the center than the raised part and being thinnest in the sealing plate, a relay part in an annular shape located nearer to the center than the fragile part, and a middle part located nearer to the center than the relay part and including a center part of the sealing plate, wherein when viewed in a radial direction of the sealing plate, in a thickness direction of the sealing plate, the fragile part is apart from the flange part in a first direction parallel to the thickness direction, and the relay part protrudes toward a second direction opposite to the first direction.

### Advantageous Effects of Invention

The present disclosure can enhance the reliability of a sealing plate used for a power storage device.

### Brief Description of Drawings

[FIG.1] FIG. 1 is a perspective sectional view showing a partial extract of an example of a power storage device in accordance with an exemplary embodiment of the present disclosure.
[FIG.2] FIG. 2 is a front sectional view showing the partial extract of the power storage device of FIG. 1.
[FIG.3] FIG. 3 is a perspective sectional view showing a partial extract of an example of a sealing plate in accordance with the exemplary embodiment of the present disclosure.
[FIG.4] FIG. 4 is a front sectional view of the sealing plate of FIG. 3.
[FIG.5A] FIG. 5A is a front sectional view showing a modification of the sealing plate in accordance with the exemplary embodiment of the present disclosure.
[FIG.5B] FIG. 5B is a front sectional view showing another modification of the sealing plate in accordance with the exemplary embodiment of the present disclosure.
[FIG.6A] FIG. 6A is a perspective sectional view showing a partial extract of a modification of the sealing plate in accordance with the exemplary embodiment of the present disclosure.
[FIG.6B] FIG. 6B is a perspective sectional view showing a partial extract of another modification of the sealing plate in accordance with the exemplary embodiment of the present disclosure.

### Description of Embodiments

Hereinafter, the present disclosure is described based on suitable exemplary embodiments with reference to the accompanying drawings. The exemplary embodiments do not intend to limit the present disclosure but exemplify the disclosure. Not all of the features and the combinations thereof described in the exemplary embodiments are necessarily essential to the present disclosure. The same reference numerals are given to the same or equivalent constituting elements, members, processes shown in the drawings, and a duplicate description will be omitted as appropriate. The scales and shapes of parts shown in the drawings are set for convenience to facilitate the explanation, and are not to be construed in a limited way unless otherwise noted. Terms like "first", "second", etc. used in the specification or claims do not indicate an order or importance by any means unless otherwise specified and are used to distinguish a certain configuration from the others. Those of members that are not important in describing the embodiment are omitted from the drawings.

The sealing plate of the present disclosure includes a flange part in an annular shape provided on an outer peripheral edge, a raised part in an annular shape located nearer to a center than the flange part and being thicker than the flange part, a fragile part located nearer to the center than the raised part and being thinnest in the sealing plate, a relay part in an annular shape located nearer to the center than the fragile part, and a middle part located nearer to the center than the relay part and including a center part of the sealing plate. In a thickness direction of the sealing plate, the fragile part is apart from the flange part in a first direction parallel to the thickness direction. Furthermore, the relay part protrudes toward a second direction opposite to the first direction. With this configuration, in the sealing plate of the present disclosure, since a thickness of the relay part located nearer to the middle of the sealing plate than the fragile part, when the fragile part protrudes toward the second direction opposite to the first direction in which the fragile part is apart from the flange part, the protruding dimension can be reduced. Therefore, even when the relay part and the middle part are made to be thick, an increase in the thickness of the sealing plate can be suppressed. When the middle part located nearer to the center of the sealing plate than the relay part is made thicker than the relay part and protrudes in the same direction as the relay part protrudes, similar to the relay part, the protruding amount can be suppressed. Note here that the phrase "in a thickness direction of the sealing plate, the fragile part is apart from the flange part in a first direction parallel to the thickness direction" means, in other words, that the flange part and the fragile part do not overlap with each other when viewed in a radial direction of the sealing plate (or the power storage device).

Furthermore, in the sealing plate of the present disclosure, the first direction is upward with respect to the sealing plate, and the second direction is downward with respect to the sealing plate, the relay part includes an inclined surface with a lower surface protruding, the raised part protrudes upward from an upper surface of the flange part, the fragile part is located in an upper part than the flange part, the inclined surface of the relay part is formed on the lower surface of the relay part, and the relay part is thicker near the middle part than near the fragile part. With this configuration, the thickness of the sealing plate can be increased while reduction of the volume inside the outer covering body of the power storage device is reduced as compared with the sealing plate in which the raised part protrudes downward and the fragile part is located in the lower part of the sealing plate. Note here that the sealing plate of the present disclosure is not necessarily configured such that the raised part protrudes upward from the flange part, and the fragile part is located in the upper part than the flange part, and the inclined surface is not provided on the lower surface of the relay part. For example, the raised part may protrude downward from the flange part, and the fragile part may be located in the lower part than the flange part, and the inclined surface may be formed on the upper surface of the relay part. Note here that the lower surface of the relay part is not limited to an inclined surface. Furthermore, the raised part may protrude both upward and downward with respect to the flange part. In such a case, when viewed in the radial direction, the fragile part may be apart either upward or downward from the flange part in the thickness direction of the flange part. The lower surface of the relay part may be stepped.

Furthermore, in the sealing plate of the present disclosure, the inclined surface of the relay part may overlap with the flange part when viewed in the radial direction. By extending the inclined surface in this way, the thickness of the relay part can be easily increased.

Furthermore, in the sealing plate of the present disclosure, the upper surface of the relay part may be a flat surface, and an upper surface of the fragile part, an upper surface of the raised part, and the upper surface of the relay part may be flush. With this configuration, in the sealing plate of the present disclosure, the rigidity when the sealing plate is pressed from the lower surface to the upper surface with the pressure inside the power storage device is increased as compared with the sealing plate in which the relay part is provided with an annular inclined surface so that the upper surface of the sealing plate is recessed.

Furthermore, in the sealing plate of the present disclosure, the middle part in the sealing plate may be the thickest. With this configuration, when the lower surface of the middle part is joined to a lead for collecting electrodes of an electrode group, in a case where the upper surface of the middle part is joined to the current collecting member, higher reliability can be obtained in joining the current collecting member and the middle part.

Furthermore, a power storage device using the sealing plate of the present disclosure may include an electrode group including a first electrode and a second electrode, an outer covering body housing the electrode group, and a sealing plate for closing an opening part of the outer covering body via a gasket with insulation property. Then, the sealing plate is the sealing plate mentioned above, the first electrode may be electrically coupled to the sealing plate, and the second electrode may be electrically coupled to the outer covering body. With this configuration, the reliability of the sealing plate is enhanced, and, as a result, a power storage device with higher reliability can be obtained.

Furthermore, in the power storage device using the sealing plate of the present disclosure, the outer covering body may include a cylindrical part housing the electrode group inside thereof, a bottom part closing a first end of the cylindrical part, and the opening part provided on a second end of the cylindrical part. The cylindrical part may include a groove part including an outer peripheral surface being recessed in an annular shape so that an inner peripheral surface of the cylindrical part protrudes in the radial direction. The gasket may be in a cylindrical shape, and may cover an upper surface and a lower surface of the flange part of the sealing plate, and an outer peripheral surface linking the upper surface and the lower surface of the flange part. The sealing plate may be provided on an inner peripheral surface of the groove via the gasket being cylindrical-shaped, and the opening part of the outer covering body may include a crimping part falling toward the center of the sealing plate and being in contact with the upper surface of the flange part via the gasket. With this configuration, the reliability of the sealing plate is enhanced, and, as a result, a power storage device with high reliability can be obtained.

Furthermore, in the power storage device using the sealing plate of the present disclosure, the raised part of the sealing plate may protrude upward from the upper surface of the flange part, and the gasket covering the upper surface of the flange part may include a wall part in an annular shape extending from the crimping part toward the raised part and being in contact with an outer side surface of the raised part. With this configuration, formation of a puddle between the wall part and the raised part can be suppressed as compared with a configuration in which the wall part is located in the vicinity of the tip end of the crimping part and apart from the raised part. Therefore, it is possible to suppress short circuit due to the liquid of the puddle between the case and the sealing plate. This effect is particularly effective in a case where the upper end of the wall part is located in a higher position than the upper end of the crimping part.

Furthermore, in the power storage device using the sealing plate of the present disclosure, an upper end of the wall part of the gasket may be located in an upper part than an upper end of the sealing plate. With this configuration, the crimping part electrically coupled to the second electrode and the sealing plate electrically coupled to the first electrode can be separated from each other via a wall part. As a result, it becomes easy to insulate the crimping part and the sealing plate from each other.

### Exemplary Embodiment

Hereinafter, a sealing plate in accordance with the exemplary embodiment of the present disclosure and a power storage device using the sealing plate are described with reference to the following drawings. Note here that the following exemplary embodiments are described based on the configuration of a nonaqueous secondary battery such as a lithium-ion secondary battery as an example of a power storage device. However, the power storage device of the present disclosure is not limited to the above-mentioned battery. The power storage device of the present disclosure may be an alkaline storage battery, a capacitor, and the like.

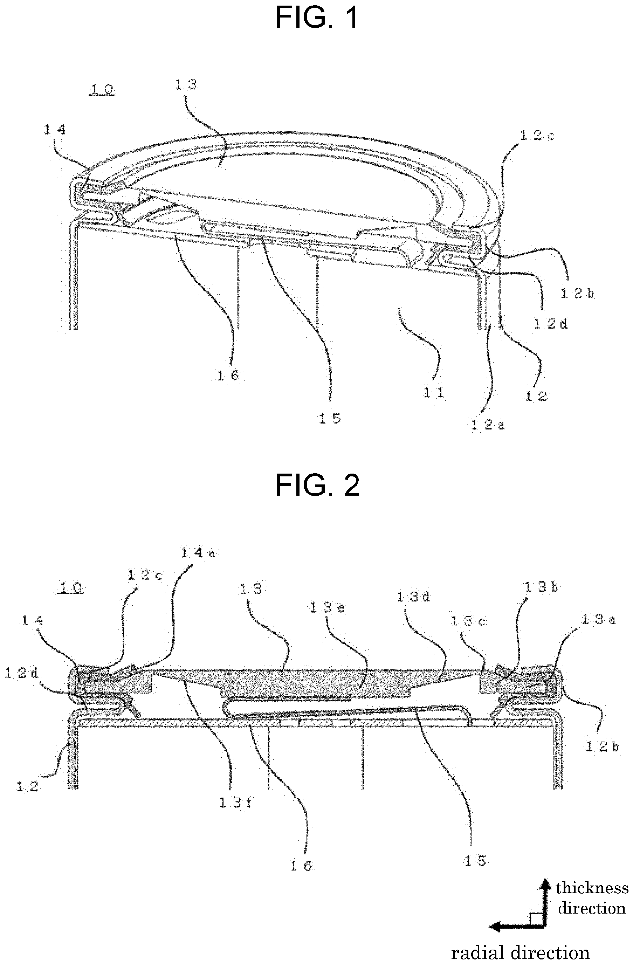

FIG. 1 is a perspective sectional view showing a partial extract of power storage device 10 in accordance with an exemplary embodiment of the present disclosure. FIG. 2 is a front sectional view showing the partial extract of power storage device 10. In FIG. 1, hatching to be given to the section of power storage device 10 is omitted for ease of viewing the drawing. In FIG. 2, most of visible outlines of a space beyond the section of power storage device 10 are omitted for ease of viewing the drawing.

As shown in FIG. 1 and FIG. 2, power storage device 10 includes electrode group 11 including a first electrode and a second electrode, outer covering body 12 housing electrode group 11, sealing plate 13 for sealing opening part 12b of outer covering body 12 via gasket 14, lead 15 for electrically coupling sealing plate 13 and the first electrode to each other, and insulating plate 16 provided between electrode group 11 and sealing plate 13.

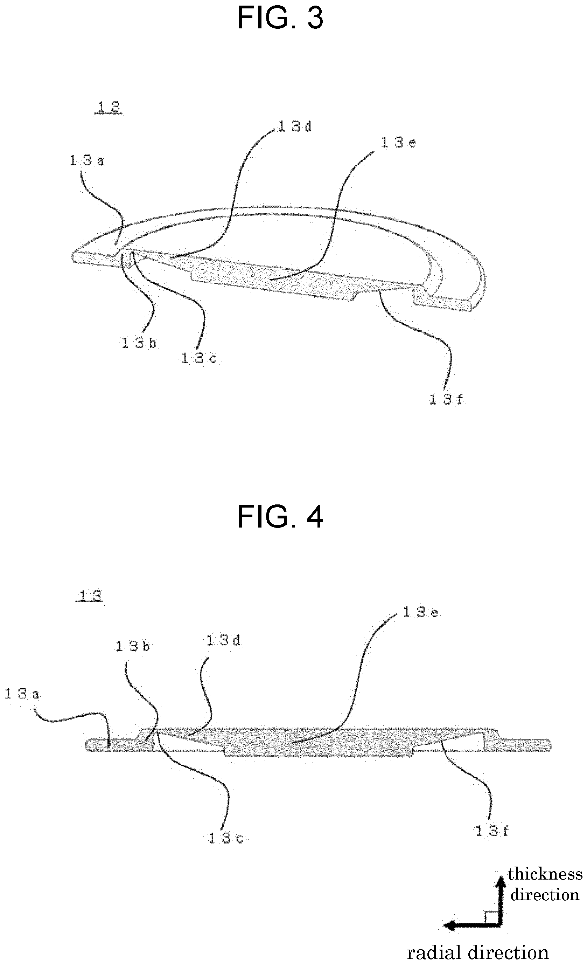

FIG. 3 is a perspective sectional view showing a partial extract of sealing plate 13. FIG. 4 is a front sectional view of sealing plate 13 of FIG. 3.

Sealing plate 13 is electrically coupled to the first electrode of electrode group 11 (detailed configuration is mentioned later). Therefore, sealing plate 13 is made of a conductive member. Examples of materials constituting sealing plate 13 include aluminum, copper, nickel, iron, titanium, or alloys of these metals. Sealing plate 13 is molded, for example, by processing the above metal plate. As one example, aluminum is used for sealing plate 13. Sealing plate 13 is, for example, a disk.

As shown in FIG. 3 and FIG. 4, sealing plate 13 includes flange part 13a in an annular shape provided on an outer peripheral edge, raised part 13b in an annular shape located between a center of sealing plate 13 and flange part 13a and being thicker than flange part 13a, fragile part 13c in an annular shape located between the center and raised part 13b and being the thinnest in sealing plate 13, relay part 13d located between the center and fragile part 13c, and middle part 13e located between the center and relay part 13d and including the center. Fragile part 13c is apart in the first direction from flange part 13a in the thickness direction of sealing plate 13 (or the height direction of power storage device 10). Relay part 13d protrudes in the second direction opposite to the first direction. Herein, in sealing plate 13, the first direction is upward with respect to sealing plate 13, and the second direction is downward (direction facing electrode group 11) of sealing plate 13. However, the first direction may be downward and the second direction may be upward.

Flange part 13a is a ring-shaped flat plate including an upper surface and a lower surface, and an outer peripheral surface linking the upper surface and the lower surface. Flange part 13a is fixed to outer covering body 12 in a state sandwiched between groove part 12d of outer covering body 12 mentioned later and crimping part 12c via gasket 14 in the thickness direction. By thinning flange part 13a, the distance between groove part 12d and crimping part 12c can be reduced, and a space in which sealing plate 13 of power storage device 10 is disposed can be reduced.

Raised part 13b is a part that is thicker than flange part 13a in sealing plate 13. Raised part 13b enhances the rigidity of sealing plate 13. Raised part 13b extends from flange part 13a, and raised part 13b is raised to protrude upward from flange part 13a. With this configuration, crimping part 12c and gasket 14 in part can be housed in a space partitioned by flange part 13a and raised part 13b. Therefore, as power storage device 10, a dead space can be used.

Fragile part 13c is annular-shaped, and is the thinnest part in sealing plate 13. Fragile part 13c is broken preferentially in sealing plate 13 when a pressure in power storage device 10 rises and exceeds a predetermined pressure. After fragile part 13c is broken, gas accumulated in power storage device 10 is released from the broken part. Since fragile part 13c is broken, when the pressure in power storage device 10 is too much increased, it is possible to suppress rupture from places other than fragile part 13c in power storage device 10. Fragile part 13c is adjacent to raised part 13b in the radial direction.

Fragile part 13c is formed near the upper end of raised part 13b. Therefore, fragile part 13c is apart upward from flange part 13a.

Relay part 13d is a part linking fragile part 13c and middle part 13e mentioned later. Relay part 13d is different in thickness depending on places in the radial direction. Specifically, relay part 13d is thin in a region near fragile part 13c, and thick in a region near middle part 13e. This configuration facilitates formation of fragile part 13c as compared with, for example, a relay part that becomes thinner toward the middle part. Furthermore, since it is possible to avoid forming an additional thin region in a part that is apart from fragile part 13c, the reliability of operation of fragile part 13c can be enhanced, and the thickness of relay part 13d can be increased, thus increasing the rigidity of relay part 13d.

On the lower surface of relay part 13d, in order to achieve the relationship between the thickness mentioned above, annular inclined surface 13f is formed so as to protrude downward. A first end of inclined surface 13f in the radial direction is coupled to the lower surface of fragile part 13c. A second end of inclined surface 13f is coupled to the upper end of a columnar part in the lower part of middle part 13e. Furthermore, the upper surface of relay part 13d is a flat surface parallel to the radial direction. With such a configuration, relay part 13d can be formed thick. Inclined surface 13f overlaps with flange part 13a when viewed in the radial direction. Furthermore, a part of annular inclined surface 13f extends downward from flange part 13a.

Middle part 13e is, for example, located in the center of sealing plate 13, and is the thickest part in sealing plate 13. To the lower surface of middle part 13e, one end of lower surface of lead 15 is joined. Furthermore, the upper surface of middle part 13e includes a flat surface parallel to the radial direction, and a current collecting member electrically coupling a plurality of power storage devices may be joined thereto. Note here that middle part 13e is the thickest in sealing plate 13 assuming that middle part 13e is welded to lead 15 or welded to a current collector plate in middle part 13e. However, if the above-mentioned joining is not considered, middle part 13e may not be the thickest in sealing plate 13. For example, middle part 13e may be thinner than raised part 13b.

Upper surfaces of middle part 13e, relay part 13d, fragile part 13c, and raised part 13b are flush with each other. With this configuration, even if a bending moment is generated from flange 13a or the like with respect to sealing plate 13, the upper surfaces can be pulled by each other, and deformation caused by this moment can be suppressed as compared with the sealing plate where the above regions are not flush (specifically, provided with a recess as the upper surface of the sealing plate).

In this way, when the rigidity of sealing plate 13 is enhanced, even if flange part 13a is thin, the rigidity as sealing plate 13 can be enhanced to a predetermined rigidity or more. Furthermore, the above regions are flush in a state in which raised part 13b is raised upward, thus facilitating positioning with respect to the upper end of crimping part 12c.

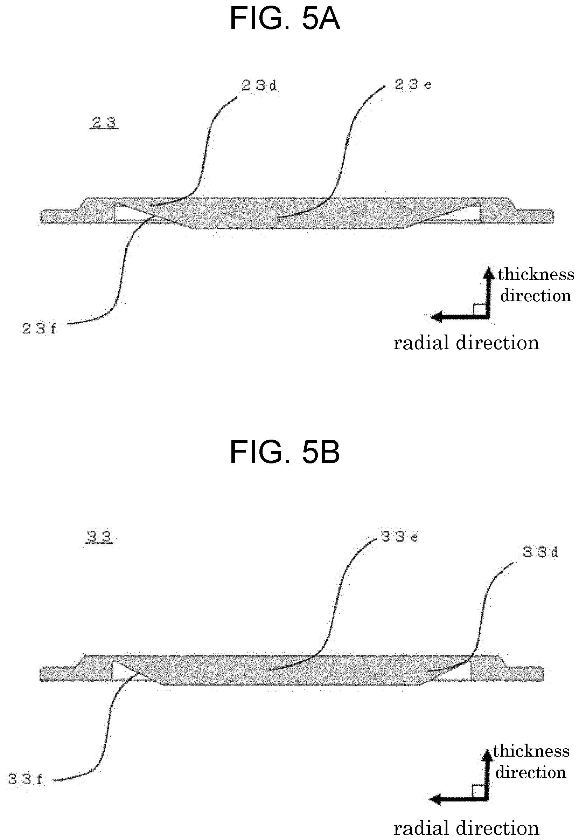

FIG. 5A is a front sectional view of sealing plate 23 that is a modification of sealing plate 13. FIG. 5B is a front sectional view of another modification of sealing plate 13.

As shown in FIG. 5A, compared with sealing plate 13, the inclination of inclined plate 23f of sealing plate 23 does not change and is directly connected to middle part 13e with a constant inclination. With such a configuration, relay part 23d of sealing plate 23 is likely to be made thicker particularly near middle part 23e. Therefore, the rigidity of relay part 23d can further be enhanced.

As shown in FIG. 5B, in sealing plate 33, the lower surface of middle part 33e is larger than that of sealing plate 23. With this configuration, when the outer diameters of sealing plate 23 and sealing plate 33 are equal, and when the thicknesses of middle parts 23e and 33e are equal, inclined surface 33f of relay part 33d of sealing plate 33 is steeper in inclination than inclined surface 33f of relay part 23d of sealing plate 23. As the inclination becomes steeper, relay part 33d becomes thicker than relay part 23d, the rigidity of relay part 33d can be enhanced.
With reference to FIGs. 1 and 2 again, the configuration of power storage device 10 is described.

Electrode group 11 includes, for example, a belt-like first electrode, a belt-like second electrode, and a belt-like separator interposed between the first and second electrodes. The first and second electrodes are wound with the separator interposed therebetween to form electrode group 11.

The first electrode is, for example, a positive electrode. The positive electrode includes, for example, a sheet-like current collector foil and a composite material layer formed on at least one surface of the current collector foil. The current collector foil includes a conductive material, for example, aluminum, copper, nickel, iron, titanium, or alloys of these metals. An example of the current collector foil of the first electrode of electrode group 11 includes aluminum. The composite material layer includes a positive electrode active material, conductive particles, a binder, and the like. Examples of the positive electrode active materials include lithium complex metal oxide.

The second electrode is, for example, a negative electrode. The negative electrode includes, for example, a sheet-like current collector foil and a composite material layer formed on at least one surface of the current collector foil. The current collector foil is made of a conductive material, for example, aluminum, copper, nickel, iron, titanium, or alloys of these metals. An example of the current collector foil of the second electrode of electrode group 11 includes copper. The composite material layer includes a negative electrode active material, a conductive particle, a binder, and the like. Examples of the negative active material include a carbon material and a silicon compound.

For the separator, an insulating material is used. Examples thereof include microporous membranes made of polypropylene. In the power storage device of the present disclosure, the first electrode may be a negative electrode and the second electrode may be a positive electrode.

Outer covering body 12 is electrically coupled to the second electrode. Therefore, outer covering body 12 is made of a conductive member. Examples of the materials for outer covering body 12 include aluminum, copper, nickel, iron, titanium, or alloys of these metals. For the materials of outer covering body 12, for example, iron is used.

Outer covering body 12 includes, for example, circular cylindrical shaped cylindrical part 12a, a bottom part closing a first end in the height direction of power storage device 10 in cylindrical part 12a, and opening part 12b provided on a second end in the height direction of cylindrical part 12a.

Electrode group 11 is housed together with an electrolytic solution in cylinder part 12a near the bottom part. At this time, the winding axis direction of electrode group 11 is parallel to the height direction of power storage device 10. The same insulating plate as insulating plate 16 may be provided between electrode group 11 and the bottom part. In this case, a lead electrically linking the second electrode to outer covering body 12 may be coupled to the bottom part by allowing the lead to bypass the insulating plate. Alternatively, a through-hole is formed in the insulating plate, and the lead may pass through the through-hole and extend. Annular groove part 12d may be formed on a space in which electrode group 11 of cylindrical part 12a is housed. Groove part 12d is a recess extending in the peripheral direction on the outer peripheral surface of cylindrical part 12a, and allows a section corresponding to the inner peripheral surface of cylindrical part 12a to protrude in the radial direction. Gasket 14 is mounted on the inner peripheral surface of groove part 12d. Furthermore, insulating plate 16 may be interposed between groove part 12d and electrode group 11. Insulating plate 16 may be made of insulating resin, rubber, and the like. Insulation plate 16 may be provided with a through-hole through which lead 15 is inserted.

Opening part 12b is a region positioned in the upper part than groove part 12d in cylindrical part 12a. Sealing plate 13 is fixed to opening part 12b via gasket 14.

A tip end portion of opening part 12b is provided with crimping part 12c. Caulking part 12c is formed by bending the tip end portion of the opening to fall toward the center of sealing plate 13. Caulking part 12c is bent to fall, thereby pushing the upper surface and the lower surface of flange part 13a of sealing plate 13 covered with gasket 14 in the thickness direction of sealing plate 13. Caulking part 12c seals opening part 12b together with sealing plate 13 and gasket 14. In addition, since crimping part 12c is electrically coupled to the second electrode, crimping part 12c may function as the connection point of the current collecting member.

Gasket 14 is, for example, an insulating elastic body. Gasket 14 may be cylindrical-shaped and may include a bottom part provided with a through-hole at the lower end in the thickness direction of sealing plate 13. This bottom part is interposed between the lower surface of the flange part 13a and the inner peripheral surface of groove part 12d, and is compressed by crimping part 12c. Furthermore, raised part 13b, fragile part 13c, relay part 13d, and middle part 13e of sealing plate 13 are exposed to the inside of outer covering body 12 from the through-hole of the bottom part of gasket 14.

The upper end of the cylindrical part of gasket 14 is bent to fall together with crimping part 12c. The upper end of the gasket is bent, so that the upper end of the gasket is interposed between the upper surface of flange part 13a and crimping part 12c.

Gasket 14 may include wall part 14a extending in the thickness direction of sealing plate 13 in a state in which wall part 14a falls together with crimping part 12c toward the tip end portion on the upper end of the cylindrical part. With this wall part, crimping part 12c and sealing plate 13 can be easily electrically insulated from each other. Wall part 14a is adjacent to the side surface of raised part 13b protruding upward with respect to flange part 13a from crimping part 12c. With this configuration, crimping part 12c is allowed to extend inward of the battery in the radial direction. Thus, in a case where crimping part 12c can be used as the above-mentioned connection point, a region connectable to the current collecting member is broadened. Furthermore, the upper end of wall part 14a that is in contact with the side surface of raised part 13b may be higher than the upper end of sealing plate 13 in the thickness direction. With this configuration, separation by crimping part 12c, sealing plate 13, and wall part 14a can make insulation of sealing plate 13 and crimping part 12c from each other easily.

Lead 15 electrically couples the first electrode of electrode group 11 to the sealing plate. Lead 15 is made of conductive materials. Examples of materials for lead 15 include aluminum, copper, nickel, iron, titanium, or alloys of these metals. Lead 15 is ribbon-shaped, and a first end thereof is coupled to a part in which the composite material layer of the first electrode is not formed. A second end is joined to the lower surface of middle part 13e of sealing plate 13.

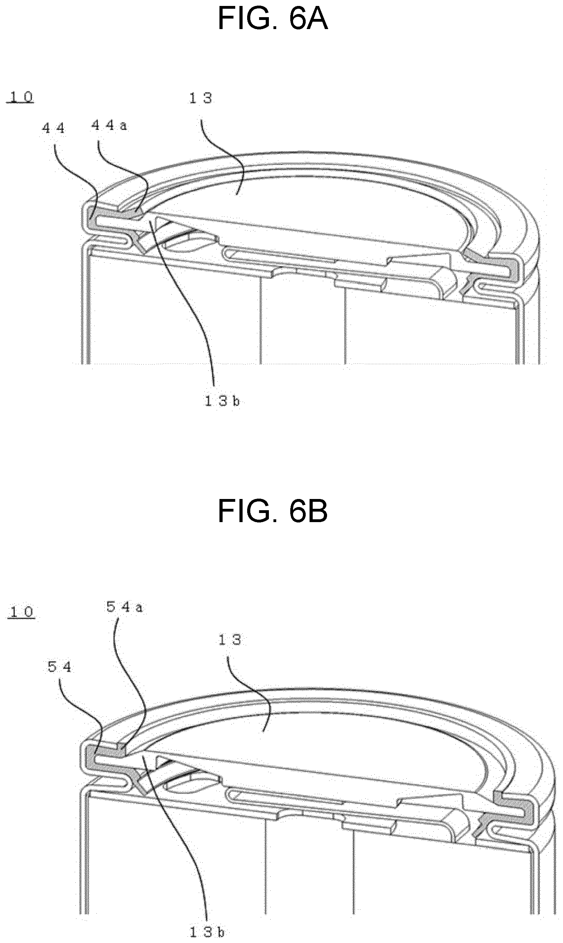

FIG. 6A is a perspective sectional view showing a modification of power storage device 10. FIG. 6B is a perspective sectional view showing another modification of power storage device 10. In FIGs. 6A and 6B, hatching provided to a section of power storage device 10 is omitted for ease of viewing the drawings.

As shown in FIG. 6A, the modification of power storage device 10 includes gasket 44 instead of gasket 14. Wall part 44a of gasket 44 is common to wall part 14a in that wall part 44a of gasket 44 is in contact with the side surface of raised part 13b. However, wall part 44a may be apart from sealing plate 13 in part.

As shown in FIG. 6B, another modification of power storage device 10 includes gasket 54 instead of gasket 14. Wall part 54a positioned at the tip end of gasket 54 is disposed to cover the tip end of crimping part 12c. Thus, sealing plate 13 and crimping part 12c can be insulated from each other more reliably.

### Industrial Applicability

In a sealing plate of the present disclosure and a power storage device using the sealing plate, the reliability of a sealing plate improved. Therefore, charge and discharge by high performance power storage device, and charge and discharge in harsher environments can be carried out. Therefore, the sealing plate and the storage device using the sealing plate of the present disclosure can be used in wide fields such as power supplies of electronic equipment and driving power supplies for drives.

### Reference Signs List

10 power storage device
11 electrode group
12 outer covering body
12a cylindrical part
12b opening part
12c crimping part
12d groove part
13, 23, 33 sealing plate
13a flange part
13b raised part
13c fragile part
13d, 23d, 33d relay part
13e, 23e, 33e middle part
13f, 23f, 33f inclined surface
14, 44, 54 gasket
14a, 44a, 54a wall part
15 lead
16 insulating plate

## Claims

1. A sealing plate for use in a power storage device, the sealing plate comprising:
a flange part in an annular shape provided on an outer peripheral edge of the sealing plate;
a raised part in an annular shape located closer to a center of the sealing plate than the flange part is in a top view, the raised part being thicker than the flange part;
a fragile part located closer to the center than the raised part is in the top view, and the fragile part being thinnest in the sealing plate;
a relay part in an annular shape located closer to the center than the fragile part is in the top view; and
a middle part located closer to the center than the relay part is in the top view, and the middle part including the center of the sealing plate,
wherein in a thickness direction of the sealing plate, the fragile part is apart from the flange part in a first direction parallel to the thickness direction, and
in the thickness direction, the relay part protrudes toward a second direction opposite to the first direction.

2. The sealing plate according to claim 1, wherein
the first direction is upward with respect to the sealing plate, and the second direction is downward with respect to the sealing plate,
the relay part includes an inclined surface with a lower surface protruding,
the raised part protrudes upward from an upper surface of the flange part,
the fragile part is located in an upper part than the flange part,
the inclined surface of the relay part is disposed on the lower surface of the relay part, and
the relay part is thicker near the middle part than near the fragile part.

3. The sealing plate according to claim 2, wherein the inclined surface of the relay part overlaps with the flange part when viewed in the radial direction.

4. The sealing plate according to claim 2, wherein
an upper surface of the relay part is a flat surface, and
an upper surface of the fragile part, an upper surface of the raised part, and the upper surface of the relay part are flush.

5. The sealing plate according to any one of claim 1 to claim 4, wherein the middle part is thickest in the sealing plate.

6. A power storage device comprising:
an electrode group including a first electrode and a second electrode;
an outer covering body housing the electrode group; and
a sealing plate for closing an opening part of the outer covering body via a gasket with insulating property,
the sealing plate being the sealing plate descried in any one of claim 1 to claim 5,
the first electrode being electrically coupled to the sealing plate, and
the second electrode being electrically coupled to the outer covering body.

7. The power storage device according to claim 6, wherein
the outer covering body includes a cylindrical part for housing the electrode group inside thereof, a bottom part closing a first end of the cylindrical part, and the opening part provided on a second end of the cylindrical part,
the cylindrical part includes a groove part including an outer peripheral surface being recessed in an annular shape to allow an inner peripheral surface of the cylindrical part to protrude in the radial direction,
the gasket is in a cylindrical shape, and covers an upper surface and a lower surface of the flange part, and an outer peripheral surface linking the upper surface and the lower surface of the flange part,
the sealing plate is provided on an inner peripheral surface of the groove via the gasket in a cylindrical shape, and
the opening part of the outer covering body includes a crimping part falling toward the center and being in contact with the upper surface of the flange part via the gasket.

8. The power storage device according to claim 7, wherein
the raised part of the sealing plate protrudes upward from the upper surface of the flange part, and
the gasket covering the upper surface of the flange part includes a wall part in an annular shape extending from the crimping part toward the raised part and being in contact with an outer side surface of the raised part.

9. The power storage device according to claim 8, wherein an upper end of the wall part is located in an upper part than an upper end of the sealing plate.
